# EUROPEAN PATENT APPLICATION

(11) **EP 2 869 202 A1**
(43) Date of publication of application: **06.05.2015**
(21) Application number: 13191370.9
(22) Date of filing: 04.11.2013
(51) Int. Cl.: G06F 11/14

(54) **Functional unit for a processor**

(71) Applicant: UNIVERSITEIT TWENTE, 7522 NB Enschede (NL)
(72) Inventor: Rohani, Alireza, 7522 NB Enschede (NL); Kerkhoff, Hans Gerard, 7522 NB Enschede (NL)
(74) Representative: Nederlandsch Octrooibureau

(57) **Abstract**

The invention provides a functional unit for a processing unit, the functional unit comprising:
- at least one input register (21, 21') configured to receive data from at least a data source (4, 6);
- a combinational logic unit (25) configured to
- receive an input value from the at least one input register,
- produce an output (28) using the input value,
- detect the occurrence of an error in the output, and
- raise a detection signal (26) in case an error is detected;

characterized by
- at least one shadow register (23, 23') connected to the data source (4, 6), the at least one shadow register being configured to receive data from the data source (4, 6) and to send data to the combinational logic unit (25),
wherein the functional unit (25) is configured to, when an error is detected during processing of an input value by the combinational logic unit (25), provide said input value again to the combinational logic unit (25).

## Description

### Field of the invention

The invention relates to a functional unit for a processor, such as a Very Large Instruction Word Processor. The invention further relates to a processor comprising at least one such functional unit. The invention further relates to a functional unit and processor capable of mitigating the effect of transient faults in harsh environments.

### Background of the invention

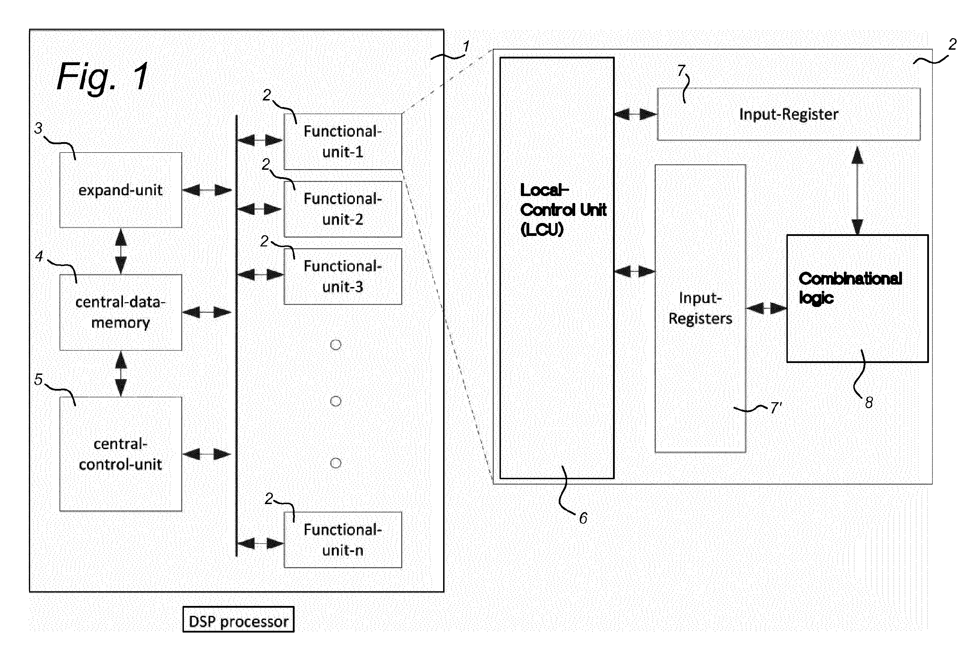

A very effective design for Digital Signal Processing (DSP) CPUs is the Very Large Instruction Word (VLIW) architecture. Figure 1 shows the basic architecture of VLIW CPUs, according to an embodiment of the state of the art. In a VLIW CPU 1, several tasks can be performed in parallel by using a sequence of functional units 2, also called execution units, accompanied in the CPU. Each functional unit receives an instruction from the central control unit 5 along with the required data from a central data memory 4, such as a register file. The data received from the central control unit and central data memory passes through a local control unit and will be stored in the input register 7, 7' of each functional unit, and then will be passed to the combinational logic unit 8 to be used in the execution of the instruction. The local control unit 6 decodes the instruction given from the central control unit and produces the required control signals for each instruction.

With the continuous development of sub 100-nanometer process technology, a new category of faults is emerging, the so called transient faults. Transient faults (hereafter also: transient error) arise from cosmic rays or from energetic particles omitted from inside the packaging materials, emerge for a very brief period of time (normally for a few hundred picoseconds) and then disappear. Therefore, it is desirable to be able to recover from transient faults as rapidly as possible so that the performance will not be degraded. This is particularly vital in those applications where the full efficiency of the CPU is required to handle the enormous need of data bandwidth.

One of the approaches for transient fault recovery is the check-point and recovery (CR) method, in which the current state of the CPU is saved in a memory device at various points in the execution of the program code (referred to as checkpoints). When an error due to transient faults is detected, the CPU status is reloaded with the last check-point (referred to as roll-back). The program execution is resumed once the state of the CPU is restored from the latest check-point. Generally, methods based on this approach impose a large overhead to the system, as the whole status of the processor needs to be stored and reloaded at specific intervals, and they suffer from a long recovery time. Moreover, the control unit of the processor needs to be changed to handle the CR based methods.

Another common approach for transient fault recovery is based on redundancy techniques. These methods hold negligible detection-latency times, but the imposed overhead on the area/power may be significant.

Therefore, an unresolved need exists in the industry of CPUs, in particular DSP-CPUs, for a recovery mechanism from transient faults which impose a reduced overhead on the processor (in terms of performance and/or power) and detection-latency times.

### Summary of the invention

An objective of the present invention is to provide a transient fault recovery mechanism that imposes reduced overhead to the system. A further objective of the present invention is to store a reduced amount of information for the recovery mechanism.

The invention provides a functional unit for a processing unit, the functional unit comprising at least one input register configured to receive data from at least a data source, and a combinational logic unit configured to receive an input value from the at least one input register, produce an output using the input value, detect the occurrence of an error in the execution, and raise a detection signal. At least one shadow register is connected to the data source, the at least one shadow register being configured to receive data from the data source and to send data to the combinational logic unit, wherein the functional unit is configured to, when an error is detected during processing of an input value by the combinational logic unit, provide said input value again to the combinational logic unit.

When a transient error occurs in the combinational logic unit and the detection signal is raised, the functional unit is thus configured to re-execute the failed instruction using the same input as before. In the meantime, the new data from the data source can be saved in the shadow register. The invention thus advantageously provides a mechanism for recovering from a transient error by re-executing only the failed instruction, and only in the failed functional unit. The re-execution takes one additional clock cycle, which is much less than the time required for known CR recovery mechanisms. In addition, the overhead for the mechanism is also reduced. For each input register that provides input for the combinational logic, one shadow register is provided. Each clock cycle, a copy of the input register is stored in the shadow register. This additional overhead in logic circuits (the shadow registers) is minimal. The overhead in processing is also much less than the typical overhead for creating a processor checkpoint.

Various embodiments are possible to implement the above general principle. In particular, the shadow register can be connected to the combinational logic unit to directly provide a value to said unit. It can also provide the value to the combinational logic unit via the input register. In that case, the shadow register is connected to the input register, and the input register is in turn connected to the combinational logic. Other ways of implementing the general principle outlined above may be available to a skilled person.

The present mechanism only protects against transient faults or errors for which a detection signal can be raised. In exemplary embodiments, the combinational logic is provided with a transient error detection mechanism, connected to the detection signal. In these embodiments, transient errors are detected if they occur in the combinational logic unit, and may go unnoticed if they occur elsewhere in the functional unit. However, the vast majority of transient errors occur in the combinational logic unit, in particular when the integrated circuit (IC) manufacturing technology shrinks to 45nm or less, so that in many applications the more complete protection provided by CR mechanisms, which incur significantly more overhead, is not needed. In addition, in further exemplary embodiments of the invention, other parts of the functional unit are protected against (transient) errors using other mechanisms. For example, the skilled person will have access to ways for protecting input and shadow registers.

In an embodiment of the present invention, the combinational logic unit is configured to receive data from the connected input register or from the shadow register, directly or indirectly, depending on the state of a signal derived from the detection signal. When this signal is zero (low), the input to the combinational logic unit will come from the input register. When the signal is one (high), the input to the combinational logic will come from the shadow register. Typically, a processor is designed so that it is not possible to freeze the processor before the next value from the data source is provided to the functional unit. Therefore, in case a transient error occurs, the new data source value should be saved somewhere while the previous value is processed again. By allowing the shadow register to read from the data source, the shadow register can advantageously temporarily save the incoming data from the data source, while the input register again presents the previous value of the data source to the combinational logic unit in the next clock-cycle after transient error detection. In an embodiment, the combinational logic unit is configured to receive data from the shadow register in the second clock cycle after transient error detection. This eliminates the need for a further backup register.

In an embodiment of the present invention, one of the at least one input register is connected to an external data memory as data source. The functional unit according to another embodiment of the present invention, further comprises a local control unit, LCU, wherein one of the at least one input register is connected to the LCU as data source.

In an embodiment of the preset invention, the functional unit further comprises at least one multiplexer per input register configured to receive the detection signal from the combinational logic unit. The multiplexer is configured to send data to the input register from its own output when the detection signal is raised. Effectively, this connection allows an input register to maintain its value from one clock cycle to the next. Multiplexers are an effective means to controllably toggle input sources for a register. The detection signals, or signals derived from the detection signals, can serve as the control signal for the multiplexers.

In an embodiment of the preset invention, the functional unit further comprises at least one input-shadow multiplexer per shadow register configured to receive a signal derived from the detection signal from the combinational logic. The input-shadow multiplexer is configured to send data from the shadow register to the combinational logic unit when the detection signal is raised. The derived signal can be the detection signal itself, or a time delayed detection signal. In an embodiment, the derived signal is a signal that is high for one full clock cycle after the cycle in which the detection signal is raised.

In an exemplary embodiment of the present invention, the functional unit comprises exactly one shadow register per input register. Using just one shadow register per input register advantageously reduces overhead. In accordance with an exemplary aspect of the present invention, the detection of an error is performed in the combinational logic unit by implementing two multiplications, wherein one implementation calculates a complete result and one implementation calculates a partial result, and comparing the results for consistency. By only partially rather than fully duplicating the multiplier, overhead is reduced. The partial implementation can be designed so that it is extremely unlikely that in case a transient error occurs, the partial result remains consistent with the full result. In other words, a lack of consistency will be a reliable indication of the occurrence of a transient error. In an embodiment, the calculated partial result is a number of least significant bits of the complete result, and the check is to compare the bits of the calculated partial result with the corresponding bits of the complete result.

The invention further provides a processing unit which comprises a central control unit, a data memory, and one or a plurality of functional units as described above.

In an embodiment of the present invention the processing unit further comprises a wait register for, when a detection signal is raised in one functional unit, halting all other functional units. This is performed by triggering a wait signal in the next consecutive clock cycle after the error detection that freezes the rest of the processor.

In an embodiment of the present invention, the processing unit is a Very Large Instruction Word, VLIW, processing unit.

The invention further provides a method for transient fault recovery, implementing the actions as outlined above and in the exemplary embodiments described below.

The invention provides a method for transient fault recovery in a functional unit of a processing unit , the method comprising:
- receiving an input value from a data source in an input register;
- providing the input value to a combinational logic unit;
- detecting an error in the combinational logic unit and raising a detection signal;
- in response to the detection signal, providing the input value again to the combinational logic unit; and
- receiving an next input value from the data source in a shadow register;

The order of the actions of the method according to the invention are not fixed. Alternative hardware implementations make different chronologies possible. In addition, alternative implementations can switch the roles of input and shadow registers. For example, either the shadow or the input register can store the incoming value from the data source, while the previous value is provided again to the combinational logic unit.

Other salient features of the present invention will become apparent to those skilled in the art from the following detailed description in conjunction with the annexed drawings.

### Brief description of the Figures

On the attached drawing sheets:
- Figure 1 schematically shows the basic architecture of very long instruction word (VLIW) control process units (CPUs), according to an embodiment of the state of the art;
- Figures 2a and 2b illustrate an elaborated VLIW CPU architecture according to embodiments of the present invention;
- Figure 3 illustrates a timing diagram of a transient error recovery mechanism according to an embodiment of the present invention;
- Figure 4 schematically illustrates a transient error detection mechanism that takes place in a combinational logic unit according to an embodiment of the present invention; and
- Figure 5 shows a state diagram of a transient error recovery mechanism according to an embodiment of the present invention.

### Detailed description

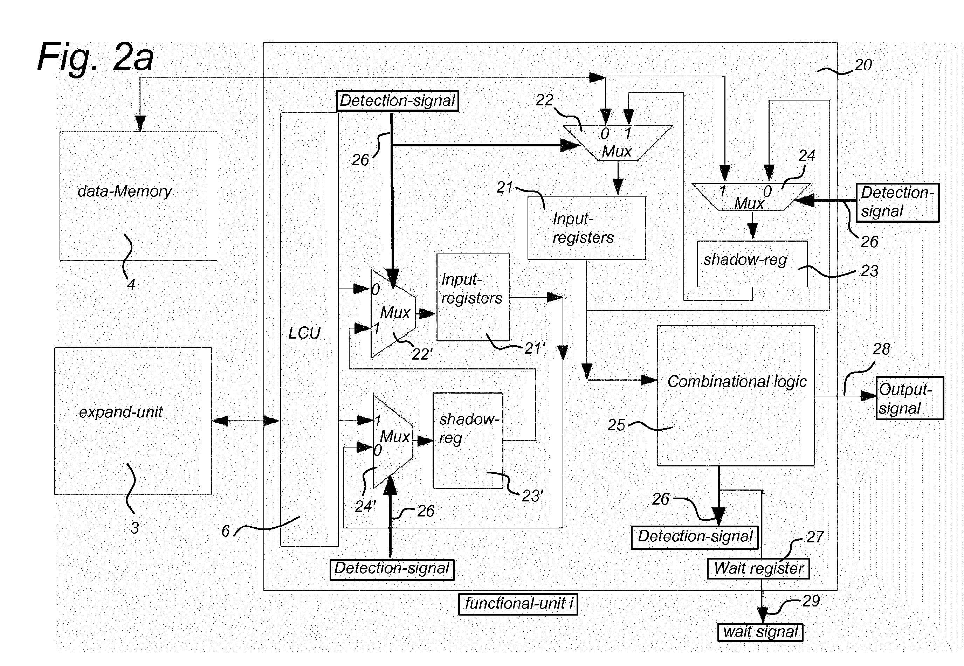

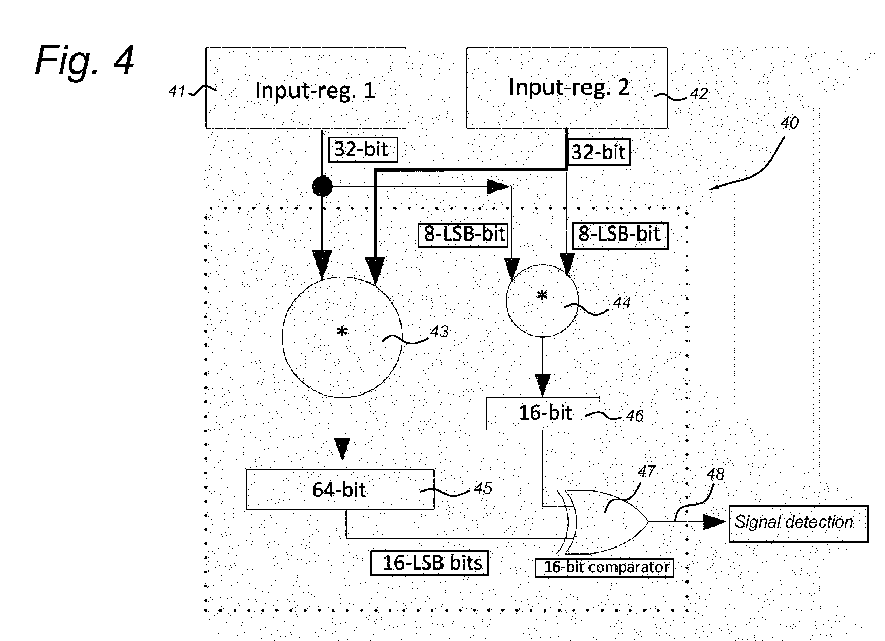

Figure 2a schematically illustrates an elaborated VLIW CPU architecture according to an exemplary embodiment of the present invention. The functional unit 20 includes a local control unit (LCU) 6, input registers 21, 21' and a combinational logic unit 25. The functional unit 20 further includes shadow registers 23, 23', and multiplexers 22, 22', 24, 24'. Combinational logic unit 25 is provided with a mechanism (see also figure 4) for detecting the occurrence of a transient error. When a transient error is detected, combinational logic unit 25 outputs a detection signal 26 with value one (high). When no error is detected, the value is zero (low). Reference number 26 thus indicates a detection signal which is generated by the combinational logic unit 25 and provided as select line to each of the multiplexers 22, 22', 24, 24'. This detection signal drives a wait register 27 which in turn outputs a wait signal 29, which is thus derived from the detection signal, in the next clock cycle after error detection. The input registers 21, 21' are configured to receive, during normal error-free operation, data from a data source, which in the present example can be an external data memory 4 or the LCU, which in turn receives and decodes data from an external expand unit 3. Data can for example be a digitally coded value, piece of information, or a coded or decoded instruction. The external (to the functional unit 20) data memory 4 and the LCU 6 can be generally referred to as data sources in the present description.

In the present example, input register 21 is connected to data memory 4 and input register 21' is connect to LCU 6. The values received by the input registers 21, 21' are, during normal operation of the functional unit, sent to the combinational logic unit 25 to be processed. Each input register 21, 21' is paired with a respective shadow register 23, 23', so that the shadow register can receive and hold a copy of the data in the input register 21, 21' with which they are associated (paired). More particularly, each shadow register 23, 23' can be configured to hold, for at least one consecutive clock cycle, the same data that was held in the associated input register 21, 21' during the immediate previous clock cycle. Shadow registers 23, 23' can effectively function as a kind of time-delayed back-up register.

In the present example, the multiplexers 22, 22' connected to the input registers 21, 21' provide the possibility of steering the data to the input registers from the normal data sources (4 and 6, respectively) or from the associated shadow registers (23 and 23' respectively). The input registers will be loaded with data from the normal data sources 4, 6 if the detection signal 26 is zero (low), or with the data from the associated shadow registers 23, 23' if the detection signal is one (high).

The multiplexers 24, 24' connected to the shadow registers 23, 23' provide the possibility of sending to the respective shadow registers the data stored in the input registers 21, 21' in the previous clock cycle, or data from the data sources 4, 6. The shadow registers 23, 23' will be loaded with the data from the input registers 21, 21' if the detection signal 26 is zero, or from the data sources 4, 6, if the detection signal is one.

As was mentioned before, the detection signal 26 is zero while no transient error is detected in the combinational logic unit 25, and it is set to one when a transient error is detected in the combinational logic, being set to zero again in the next clock cycle. Moreover, the raised detection signal 26 will drive a wait register 27 that will trigger a wait signal 29 which will halt the processor, or at least the other functional units 20 of the processor, for the next clock cycle. Therefore, if an error is detected in the combinational logic unit 25 of a functional unit, the wait signal of the processor will be raised for the next consecutive clock cycle, which hampers the remaining functional units, that can be referred to as healthy functional units, to proceed the program.

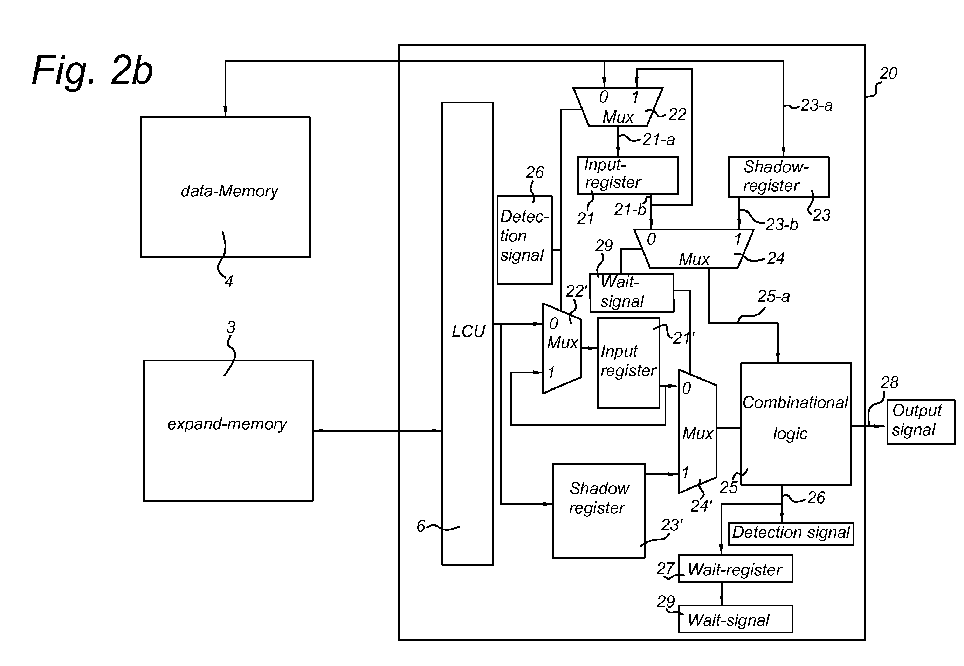

Figure 2b schematically illustrates an elaborated VLIW CPU architecture according to another exemplary embodiment of the present invention.

In this embodiment, the detection signal 26 drives a wait register 27 which in turn outputs a wait signal 29 in the next clock cycle after error detection. When no error is detected, the value of detection signal and wait signal are zero (low). Reference number 26 indicates a detection signal which is generated by the combinational logic unit 25 and provided as select line to each of the multiplexors 22 and 22'. Reference number 29 indicates a wait signal which is triggered by the wait register driven by the detection signal 26, the wait signal provided as select line to each of the multiplexers 24 and 24'.

In this embodiment, each shadow register 23, 23' holds, for at least one consecutive clock cycle, the same data that will be held in the associated input register 21, 21' during the immediate next clock cycle. Shadow registers 23, 23' can effectively function as a back-up register to prevent the new data of the input register from being lost.

In the present example, the multiplexers 22, 22' connected to the input registers 21, 21' provide the possibility of steering the data to the input registers from the normal data sources (4 and 6, respectively) or from the previous values of the input registers. The input registers will be loaded with data from the normal data sources 4, 6 if the detection signal 26 is zero (low), or with the data from their own output if the detection signal is one (high). In other words, when the detection signal is low, the input register will receive a (new) value from the data source, while if the signal is high, the input register will again receive its present value.

The multiplexers 24, 24' connected to the combinational logic provide the possibility of sending to the combinational logic the data stored in the shadow registers 23, 23' or data from the input registers 21, 21' depending on the wait signal 29. The combinational logic will be provided with the data from the input registers 21, 21' if the wait signal 29 is zero, or with the data from the shadow registers 23, 23', if the wait signal 29 is one.

As was mentioned before, the detection signal 26 is zero while no transient error is detected in the combinational logic unit 25, and it is set to one when a transient error is detected in the combinational logic, being set to zero again in the next clock cycle, when the error has been corrected. Moreover, the raised detection signal 26 will trigger the wait register 27. The wait register 27 will drive a wait signal 29 which will halt the processor, or at least the other functional units 20 of the processor, for the next clock cycle after error detection. Therefore, if an error is detected in the combinational logic unit 25 of a functional unit, the wait signal of the processor will be raised for the next consecutive clock cycle, which hampers the remaining functional units, that can be referred to as healthy functional units, to proceed the program.

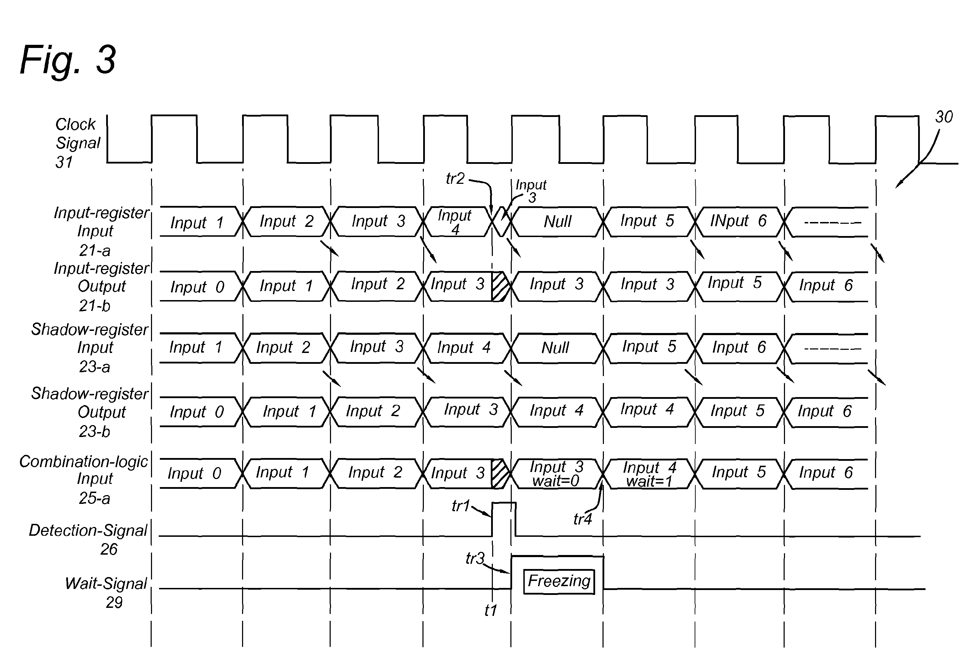

Figure 3 schematically shows a timing diagram 30 of a transient error recovery mechanism according to the embodiment of the present invention as shown in figure 2b. In figure 3, time t1 is the moment of error detection. It can be seen that the content (output) of each shadow register 23-b is in fact the content of the associated input register 21-b in that same clock cycle of clock signal 31 when the detection signal is zero. When an error is detected (with whatever method), the detection signal will be one, tr1, and immediately the content of the input register 21-b will be loaded into the same input register for the next clock-cycle, tr2. During the remainder of clock cycle in which the error detection occurred, the wait signal is still low, so the content of input register 21-b will be provided for the combinational logic 25, and therefore the faulty functional unit will replay the faulty instruction for the next consecutive clock cycle. Meanwhile, during that next consecutive clock cycle, the wait signal is set, tr3, so that the execution in the healthy functional units is stopped, so no new value will be provided for the shadow register input 23-a. In the following clock cycle, when the healthy functional units are unfrozen again and the processor is resumed, the new input data (input 5) which was supposed to be loaded during the previous, frozen cycle, is now loaded into the input and shadow registers. Meanwhile, the value that was saved in the shadow register (input 4) is provided to the combinational logic unit 25, tr4.

Considering the fact that the duration of a transient error is considerably less than a clock cycle in sub 100-nanometer technological processes, the functional unit will have recovered in the next clock cycle, so that this partial re-execution, the repeat of the calculation involving "input 3" by the combinational logic unit 25, will recover the faulty functional unit and bring it into the state where it should have been once clock cycle earlier. As a consequence, the processor may be "unfrozen" again after one clock cycle. The net result of the occurrence of the transient error is a delay of one clock cycle.

Figure 4 illustrates an example of a transient error detection mechanism in a combinational logic unit 25 according to an embodiment of the present invention. It is to be noted that this example does not limit the invention to other detection mechanisms known by those skilled in the art.

As shown in figure 4, on one hand the 32-bit values of the input registers 41, 42 are multiplied 43 to result in a 64-bit value 45. On the other hand, the eight least significant bits (LSB) of the values of both input registers are also multiplied 44, to output a 16-bit value 46. The 16 last significant bits of the 64-bit result 45 are compared 47 to the 16-bit result 46. If the output of the comparator is one, meaning that the compared values are different, the detection signal is raised immediately, starting the recovery mechanism in the next clock cycle.

The general principle of this mechanism is that next to the primary functionality (in the present example, the multiplier with 64-bit output) a secondary, partial, functionality is provided which is designed to perform just enough of the main functionality so that a statistically relevant check value is generated (in the present example, the 16 least significant bits of the multiplications). While the check value is only a partial result and therefore not a 100% verification of the result, the check value is designed so that statistically the chance of passing the check (i.e. the comparison of the output of the primary functionality and the secondary functionality) with a faulty primary result is negligible. In the present example, it is extremely unlikely that the multiplication unit will provide the correct 16 least significant bits if a transient error occurs. By including a secondary, partial, functionality next to the primary functionality and comparing the results of the primary and secondary functionalities, a statistically reliable check result is obtained without incurring the additional overhead of a full duplication of the primary functionality.

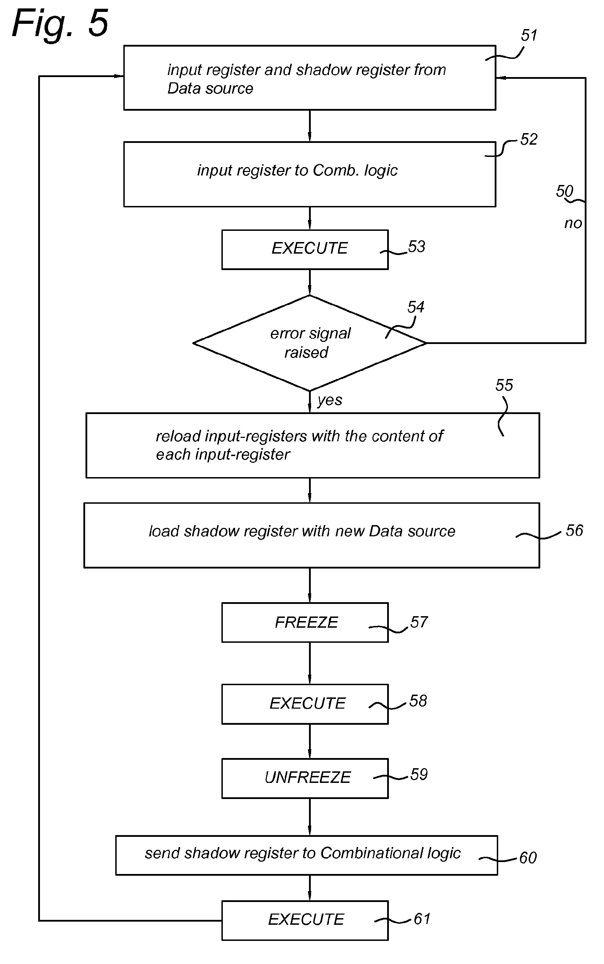

A method for recovering from a transient fault according to an embodiment of the invention described is shown in figure 5. In a normal state, an input register receives 51 data from the data source. This data is also received by the shadow register, and sent 52 to the combinational logic unit that will execute 53 the required instruction. In action 54, the state of the detection signal is checked. If it is not raised, another normal cycle is executed and the method reverts 50 to action 51.

However, if the detection signal is raised, the input register will receive 55 the next input from its own output instead of from the data source. The next input from the data source is loaded 56 into the shadow register instead of the input register, in order for the data not to be lost in the system. The healthy units of the processor will be frozen 57 for the next clock cycle. This also freezes the supply from the data sources, so that no further values become available for the next cycle. In action 58, the value of the input register is sent to the combinational logic unit to process it a second time. Then the processor will be unfrozen 59 and the data from the shadow register (which holds the temporarily saved new value from the data source) is loaded into the combinational logic unit. In action 61, the execution is carried out with one extra clock cycle delay compared to error-free situations. Then, the method reverts to action 51 in which the input register and the shadow register are loaded with data from the data source.

The presented recovery method provides a way to advantageously isolate a temporarily faulty functional unit from the healthy ones for one clock cycle and to re-execute the partial instruction of the faulty functional unit while the healthy units are waiting. Because the duration of transient errors is considerably less than one clock cycle, it can be assured that the impact of a transient error will be vanished after one clock cycle. Hence, re-execution of a faulty-part of an instruction after one clock cycle guarantees that the impact of error has been removed. It will be clear to the skilled person that various ways are possible, beside the example of figure 5, of implementing a method according the invention.

A general principle of the invention is as follows. Beside an input register, a shadow register is provided. The input register and the shadow register work together so that in case an error is detected in a calculation involving an input value from the input register, that calculation can be repeated, while the next data that was to be used in the subsequent calculation is temporarily stored. After the erroneous calculation has been repeated, the stored value for the subsequent calculation is loaded and processed.

Another advantage of the present invention is that a minimal amount of recovery information is stored for an instruction in each functional unit, which is much less than is needed in known CR methods. In addition, the invention decreases the recovery overhead to only one clock cycle, while the typical recovery mechanism can take up to 62 clock cycles in CR-based mechanisms.

For yet another advantageous feature of the present invention, the performance of the enriched processor is similar to the performance of the original processor, as long as no transient error has occurred in the system. As long as a transient error is going to alter the correct status of the CPU, one clock cycle will be imposed to the performance of CPU to mitigate the impact of this error. For example, in CR-based methods, several clock cycles are required to store a check-point, no matter of the occurrence-rate of soft-errors, while the presented method stores the next value of each input-register simultaneously; and as long as no error has been detected by the detection mechanism, the total execution time of a workload is identical to the genuine implementation of the processor.

Another further advantage of the present invention is the relatively low power overhead needed to perform a recovery operation, as all parts of the CPU will be frozen in the recovery process, except for the erroneous part.

In some embodiments of the invention, the functional unit may not be able to recover from transient errors in two consecutive clock cycles. However, given that in typical operating conditions the occurrence of a transient error is about once a day, it is extremely unlikely that a transient error occurs twice in the short period of time of two clock cycles.

However, a skilled person may adapt the invention to also handle two (or more) consecutive errors if needed. Care must be taken that processor remains frozen for two (or more) clock cycles. In addition, after the first repeat of the instruction, when the shadow register contains the next input value from the data source, care must be taken that the shadow register value is not overwritten, so that the new value can be provided a third (or fourth, fifth, etc) time to the combinational logic unit 25. In principle, the processor can be frozen for as long as is needed, and the shadow register can hold a copy of the next value for the input register until the moment that the combination logic unit 25 lowers to the detection signal and subsequently the wait signal to indicate that a consistent result has been calculated.

An alternative way to adapt the invention to handle consecutive transient errors, is by providing more than one shadow register per input register. Each consecutive shadow register can function as a time-delayed backup for the previous register.

The basic principle of the invention is thus unchanged in the further embodiments that are capable of handling consecutive errors. However, it will introduce additional complexity in the multiplexers and possibly additional logic to implement the functionality, which increases the complexity. In typical operating conditions, the additional complexity to handle consecutive errors will not be needed.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A functional unit (20) for a processing unit, the functional unit comprising:
- at least one input register (21, 21') configured to receive data from at least a data source (4, 6);
- a combinational logic unit (25) configured to
- receive an input value from the at least one input register,
- produce an output (28) using the input value,
- detect the occurrence of an error in the output, and
- raise a detection signal (26) in case an error is detected;
**characterized by**
- at least one shadow register (23, 23') connected to the data source (4, 6), the at least one shadow register being configured to receive data from the data source (4, 6) and to send data to the combinational logic unit (25),
wherein the functional unit (20) is configured to, when an error is detected during processing of an input value by the combinational logic unit (25), provide said input value again to the combinational logic unit (25).

2. The functional unit (20) according to claim 1, wherein the combinational logic unit (25) is configured to receive data from the connected input register (21, 21') or from the data source (4,6), depending on the state of a signal derived from the detection signal (26).

3. The functional unit (20) according to claim 1 or 2, wherein one of the at least one input register (21) is connected to an external data memory (4) as data source.

4. The functional unit (20) according to any one of the previous claims, further comprising a local control unit, LCU, (6), wherein one of the at least one input register (21) is connected to the LCU (6) as data source.

5. The functional unit (20) according to any one of the previous claims, further comprising at least one multiplexer (22, 22') per input register configured to receive the detection signal (26) from the combinational logic unit (25).

6. The functional unit (20) according to claim 5, wherein the multiplexer (22, 22') is configured to connect an output (21-b) of the input register (21, 21') to an input (21-a) of the input register (21, 21') when the detection signal (26) is raised.

7. The functional unit (20) according to any one of the previous claims, further comprising at least one input-shadow multiplexer (24, 24') per shadow register (23, 23') configured to receive a signal derived from the detection signal (26) from the combinational logic unit (25).

8. The functional unit (20) according to claim 7, wherein the input-shadow multiplexer (24, 24') is configured to send data from the shadow register (23, 23') to the combinational logic unit (25) when the signal derived from the detection signal (26) is raised.

9. The functional unit (20) according to any one of the previous claims, **characterized by** exactly one shadow register (23, 23') per input register (21, 21').

10. The functional unit (20) according to any one of the previous claims,
wherein the combinational logic unit (25) comprises at least two implementations (43, 44) of a function, such as a multiplication, wherein a first implementation is configured to calculate a complete result and a second implementation is configured to calculate a complete or a partial result, and the combinational logic unit (25) is configured to detect the occurrence of a transient error by comparing (47) the results from the first and second implementations.

11. A processing unit (1) comprising a central control unit (5), a data memory (4), and at least one functional unit (20) according to any one of the previous claims.

12. The processing unit (1) of claim 11, comprising a plurality of functional units (20) according to any of the previous claims 1-11.

13. The processing unit (1) of claim 12, further comprising a wait register (27) for, when a detection signal (26) is raised in one functional unit (20), halting all other functional units (20).

14. A Very Large Instruction Word, VLIW, processing unit (1) according to any one of the claims 11-13.

15. A method for transient fault recovery in a functional unit (20) of a processing unit (1), the method comprising:
- receiving an input value from a data source (4, 6) in an input register (21, 21');
- providing the input value to a combinational logic unit (25);
- detecting an error in the combinational logic unit (25) and raising a detection signal (26);
- in response to the detection signal (26), providing the input value again to the combinational logic unit (25); and
- receiving an next input value from the data source (4,6) in a shadow register (23, 23');
